# EUROPÄISCHE PATENTSCHRIFT

(11) **EP 1 948 900 B1**
(45) Veröffentlichungstag und Bekanntmachung des Hinweises auf die Patenterteilung: **11.01.2012**
(21) Anmeldenummer: 06829024.6
(22) Anmeldetag: 13.11.2006
(51) Int. Cl.: E21B 17/043, E21B 17/042, E21B 4/14

(54) **Erdbohrgerät**
Earth drilling device
Dispositif de forage du sol

(30) Priorität: 11.11.2005 DE 102005054311; 23.06.2006 DE 102006029346
(43) Veröffentlichungstag der Anmeldung: 30.07.2008
(73) Patentinhaber: Tracto-Technik GmbH, 57368 Lennestadt (DE)
(72) Erfinder: PÜTTMANN, Franz-Josef, 57368 Lennestadt (DE)
(74) Vertreter: Tilmann, Max Wilhelm
(86) Internationale Anmeldenummer: PCT/EP2006/010859
(87) Internationale Veröffentlichungsnummer: WO 2007/054353

(56) Entgegenhaltungen:
- DE-A1- 10 201 225
- DE-A1- 10 359 880
- DE-A1- 19 718 897
- US-A- 2 182 903
- US-A1- 2004 057 810

## Beschreibung

Die Erfindung betrifft ein Erdbohrgerät.

Erdbohrgeräte, insbesondere für den Bereich der grabenlosen Leitungs- und Rohrverlegung bzw. -sanierung sind in verschiedenen Ausführungsformen bekannte, siehe z.B US 2182903.

Eine Art von Erdbohrgeräten, sogenannte Erdraketen, zeichnen sich durch einen internen Schlagantrieb aus, der einen innerhalb eines Gehäuses der Erdrakete oszilierend, d.h. hin- und herschlagend, über ein Druckfluid angetriebenen Schlagkolben aufweist, der - je nach Vortriebsrichtung der Erdrakete - auf eine vordere oder hintere Schlagfläche des Gehäuses oder ein damit verbundenes Bauteil aufschlägt und dabei seine kinetische Energie zum Vortreiben des Erdbohrgeräts in dem Erdreich auf dieses überträgt.

Es ist offensichtlich, dass die Schlagflächen sowohl des Schlagkolbens als auch des Gehäuses sehr hohen Belastungen standhalten müssen. Aus diesem Grund können die Schlagflächen des Schlagkolbens sowie des Gehäuses gehärtet ausgeführt sein. Weiterhin kann vorgesehen sein, dass zumindest die vordere Schlagfläche des Gehäuses in ein bei Verschleiß auswechselbares Bauteil integriert ist. Dadurch können die Wartungskosten der Erdrakete begrenzt werden. Ein solches Austauschbauteil dient somit der Übertragung der Schlagenergie von dem Schlagkolben auf das Gehäuse. Daher sind an dessen Verbindung mit dem Gehäuse hohe Anforderungen gestellt.

Im Stand der Technik sind solche, eine Schlagfläche aufweisende Austauschbauteile regelmäßig über ein Gewinde mit dem Gehäuse verbunden, wobei die Gewindeverbindung häufig zusätzlich mittels eines Gewindesicherungsklebers gesichert wird. Diese aus dem Stand der Technik bekannte Lösung bereitet im Betrieb jedoch Probleme. Zunächst erfordert das Aushärten des Gewindesicherungsklebers einen nicht unerwünschten Zeitraum, innerhalb dessen die Erdrakete aus Sicherheitsgründen nicht betrieben werden kann. Eine solche Verzögerung führt insbesondere bei einem Auswechseln des Schlagbauteils während eines Bohrvorhabens zu ansteigenden Betriebskosten. Weiterhin lässt sich ein Schlagbauteil, das mittels eines Gewindesicherungsklebers gesichert wurde, nur unter großem Aufwand wieder von dem Gehäuse trennen.

Der vorliegenden Erfindung liegt daher die Aufgabe zugrunde, ein Erdbohrgerät zu schaffen, das zumindest einen der Nachteile des Stands der Technik verringert. Insbesondere soll eine Erdrakete geschaffen werden, bei der das die Schlagfläche aufweisende Bauteil einfach montiert und demontiert werden kann und dennoch einen sicheren Halt gewährleistet.

Diese Aufgabe wird durch den Gegenstand des unabhängigen Patentanspruchs gelöst. Vorteilhafte Ausführungsformen sind Gegenstand der abhängigen Ansprüche.

Der Kern der Erfindung sieht vor, ein zumindest an einer Stelle geschlitztes Gewindeelement, das vorzugsweise direkt oder indirekt zur Übertragung der Schlagenergie von einem Schlagkolben der Erdbohrvorrichtung auf das Gehäuse vorgesehen ist, über ein Gewinde mit dem Gehäuse zu verbinden und diese Gewindeverbindung über einen Sicherungsbolzen, der in eine dafür vorgesehene Aufnahme im Bereich des Schlitzes des Gewindeelements eingesetzt wird und dabei eine Vergrößerung des Außendurchmessers des Gewindeelements bewirkt, zu sichern. Die Vergrößerung des Außendurchmessers erhöht die Flächenpressung der Gewindeverbindung, wodurch ein ungewolltes Lösen vermieden werden kann.

Unter Gewindeelement wird ein Bauteil mit einem zumindest in einem Abschnitt kreisförmigen Querschnitt, wobei in diesem Abschnitt weiterhin ein Außengewinde vorgesehen ist, verstanden.

Der Schlitz in dem Gewindeelement soll so ausgeführt sein, dass dieser durch das Einsetzen des Sicherungsbolzens gespreizt werden kann. Er erstreckt sich vorzugsweise in Richtung der Längsachse des Gewindeelements, wobei es ebenso möglich ist, dass der Schlitz in einem Winkel bis < 90° zu der Längsachse des Gewindeelements verläuft. Weiterhin vorzugsweise erstreckt sich der Schlitz über den gesamten mit einem Gewinde versehenen Abschnitt des Gewindeelements. Hinsichtlich der Tiefe des Schlitzes ist vorzugsweise vorgesehen, daß sich dieser von dem Umfang des Gewindeelements bis zu der Längsachse des Gewindeelements erstreckt oder in einer Innenbohrung (bei einem Gewindeelement in Form eines Gewinderings) ausläuft. Hierbei kann er radial oder geneigt verlaufen.

Vorzugsweise weist die Aufnahme für den Sicherungsbolzen einen Abschnitt auf, der sich verjüngt, d.h. der Querschnitt verringert sich kontinuierlich in diesem Abschnitt. Vorzugsweise verjüngt sich der Abschnitt der Aufnahme konisch. Eine solche (konische) Verjüngung der Aufnahme bewirkt in Verbindung mit einem Sicherungsbolzen, der in die Aufnahme eingeschoben wird, eine Verbreiterung des Schlitzes des Gewindeelements und daraus folgend eine Vergrößerung von dessen Außendurchmesser.

Zusätzlich oder alternativ kann der Sicherungsbolzen einen sich - vorzugsweise konisch - verjüngenden Abschnitt aufweisen, mit Hilfe dessen eine Verbreiterung des Schlitzes beim Einsetzen des Sicherungsbolzens erreicht wird.

In einer vorteilhaften Ausgestaltung weist der Sicherungsbolzen einen Abschnitt mit einem Außengewinde auf, der zu einem Abschnitt der Aufnahme mit einem Innengewinde korrespondiert. Der Sicherungsbolzen kann somit in die Aufnahme eingeschraubt werden.

Erfindungsgemäß ist das Erdbohrgerät als schlagendes Bohrgerät (Erdrakete) ausgebildet, d.h. es weist einen internen Schlagantrieb mit einem oszillierenden, d.h. hin- und herbewegenden Schlagkolben auf. Dieser wird über ein Druckfluid, vorzugsweise Druckluft und/oder eine Druckflüssigkeit, die von außen dem Bohrgerät zugeführt werden kann, angetrieben. Bei einer solchen Ausgestaltung des Erdbohrgeräts kann das Gewindeelement dazu verwendet werden, die Schlagenergie des Schlagkolbens direkt oder indirekt auf das Gehäuse des Bohrgeräts zu übertragen.

In einer weiteren vorteilhaften Ausgestaltung ist vorgesehen, das Gewindeelement als Gewindering auszubilden. Innerhalb des Gewinderings kann ein Schlagbolzen in zumindest längsaxialer Richtung beweglich geführt sein. In diesem Fall kann vorgesehen sein, die Aufnahme für den Sicherungsbolzen dezentral, d.h. im Randbereich des Gewinderings anzuordnen. Der Schlagbolzen kann sich durch den Gewindering aus dem Gehäuse des Bohrgeräts heraus erstrecken und dort mit einem Bohrkopf verbunden sein, so dass der Bohrkopfs seinerseits beweglich zu dem Gehäuse des Bohrgeräts angeordnet ist.

Bei einer solchen Ausgestaltung des Bohrgeräts kann der Schlagkolben in einem Betriebszustand, beispielsweise bei einem Antrieb des Bohrgeräts in Vorwärtsrichtung, auf den Schlagbolzen auftreffen, der sich daraufhin zunächst relativ zu dem Gehäuse bewegt und dabei mit dem Bohrkopf das vor dem Bohrgerät befindliche Erdreich verdrängt. In einer zweiten Vortriebsstufe kann dann die verbleibende Schlagenergie über den Schlagbolzen oder den Schlagkolben direkt oder indirekt auf den Gewindering überträgen werden, um das Gehäuse in dem von dem Bohrkopf erstellten Bohrloch vorzuschieben. Auf diese Weise kann eine mehrstufige Übertragung der Schlagenergie erzielt werden, die sich als vorteilhaft hinsichtlich der erreichbaren Vorschubgeschwindigkeit gezeigt hat. Neben der erwähnten zweistufigen Übertragung können beliebig viele Vortriebsstufen vorgesehen sein, wobei regelmäßig in der (zeitlich) letzten Stufe, die Schlagenergie über den Gewindering auf das Gehäuse übertragen wird.

Ein erfindungsgemäßes Gewindeelement kann vorteilhafterweise auch bei bestehenden Bohrgeräten nachgerüstet werden. Es ist somit u.a. möglich durch den Einsatz des erfindungsgemäßen Gewindeelements die Montage neuer Bohrgeräte sowie die Wartung bereits eingesetzter Bohrgeräte zu erleichtern.

Durch den Einsatz des erfindungsgemäßen Gewindeelements kann dieses auf einfache Weise, teilweise sogar manuell in das Gehäuse des Bohrgeräts eingeschraubt werden. Daraufhin wird der Sicherungsbolzen in die Aufnahme des Gewindeelements eingesetzt, was zu einer Erhöhung der Flächenpressung der Gewindeverbindung führt und somit ein ungewolltes Lösen verhindert. Das Bohrgerät kann somit direkt eingesetzt werden, ohne dass ein Aushärten, wie es beispielsweise bei klebenden Gewindesicherungen notwendig ist, abgewartet werden müsste.

Zum Auswechseln des Gewindeelements, das als Verschleißteil vorgesehen sein kann, muss somit lediglich der Sicherungsbolzen wieder entfernt werden, wodurch die Flächenpressung in der Gewindeverbindung wieder reduziert wird. Das Gewindeelement kann daraufhin ohne großen Kraftaufwand, teilweise manuell, aus dem Gehäuse herausgeschraubt werden.

In einer bevorzugten Ausführungsform ist das Sicherungselement mehrteilig ausgebildet. Insbesondere bevorzugt weist das Sicherungselement eine Hülse auf, die in die Aufnahme des Gewindeelements eingesetzt wird, und einen Bolzen auf. Der Bolzen wird insbesondere bevorzugt zumindest teilweise in die Hülse eingesetzt.

In einer bevorzugten Ausführungsform durchgreift die Aufnahme das Gewindeelement und weist eine Öffnung auf einer Seite des Gewindeelements und eine Öffnung auf einer gegenüberliegenden Seite des Gewindeelements auf. Bevorzugt wird die Hülse von einer Seite in die Aufnahme eingesetzt und der Bolzen von der anderen Seite in die Aufnahme eingesetzt, insbesondere derart, dass der Bolzen zumindest teilweise in die Hülse eingreift, beispielsweise mit einem Außengewinde in ein Innengewinde der Hülse eingreift.

In einer bevorzugten Ausführungsform weist der zumindest teilweise in die Hülse eingesetzt Bolzen eine Verdrehsicherung, mit der der Bolzen gegen eine Verdrehung in der Aufnahme gesichert werden kann. Beispielsweise weist der Bolzen eine Nase auf, die in eine korrespondiere Ausnehmung des Gewindeelements eingreift.

In einer bevorzugten Ausführungsform ist der Bolzen konisch ausgebildet. Ergänzend oder alternativ kann die Hülse konisch ausgebildet sein.

In einer bevorzugten Ausführungsform ist ein Führungsabschnitt der Aufnahme zur Aufnahme einer als Klotz ausgebildeten Hülse ausgebildet. Die Hülse wird in dem Führungsabschnitt an zwei gegenüberliegenden Führungsflächen zur Bewegung entlang dieser Führungsflächen geführt. Die Führungsflächen nähern sich in Richtung der Spreizbewegung der Hülse an. Besonders bevorzugt ist auch der Klotz (die Hülse) konisch ausgebildet. Besonders bevorzugt ist der Klotz mit Ausnahme des Kontakts mit den Führungsflächen und dem Eingriff mit dem Bolzen frei von einem Kontakt mit anderen Elementen.

Der Klotz kann Nuten aufweisen, in die die Führungsflächen bildenden Abschnitte der Aufnahme eingreifen.

In einer bevorzugten Ausführungsform weist der Bolzen ein Außengewinde auf, das in ein Innengewinde des Klotzes eingreift. Der Bolzen kann einen Kopf aufweisen, mit dem er an einem Abschnitt des Gewindeelements anliegt. Der Kopf und/oder der ihm zugeordnete Abschnitt des Gewindeelements können konisch ausgebildet sein. Dadurch kann der Kopf zur Spreizwirkung beitragen.

In einer bevorzugten Ausführungsform durchgreift der Schlitz des Gewindeelements das Gewindeelement in Richtung seiner Längsachse und in Radialrichtung und durchgreift auch die Aufnahme. Bei einem Gewindeelement, bei dem der Schlitz das Gewindeelement in Längsrichtung vollständig von einem ersten Ende zu einem zweiten Ende durchgreift ist es von Vorteil, wenn sowohl am ersten Ende als auch am zweiten Ende Spreizmittel vorgesehen sind. Dadurch kann das Gewindeelement gleichmäßig über seine Längsrichtung gespreizt werden. Alternativ kann natürlich auch nur an einem Ende eine Spreizung erfolgen. Dies reduziert die Anzahl der Bauelemente. Die gleichmäßige Spreizung wird beispielsweise durch die vorbeschriebenen Ausführungsformen erreicht, bei dem das Sicherungselement mehrteilig ausgebildet ist und ein Bolzen von dem einen Ende in die Aufnahme eingeführt wird und in eine Hülse eingreift, die vom anderen Ende in die Aufnahme eingeführt wird.

Neben einer Verwendung für Bohrgeräte kann das erfindungsgemäße Gewindeelement in sämtlichen Bereichen eingesetzt werden, in denen eine effektive und wieder lösbare Gewindesicherung gesucht ist.

Die Erfindung wird nachfolgend anhand von in den Zeichnungen dargestellten Ausführungsbeispielen näher erläutert.

In den Zeichnungen zeigt:
- Fig. 1: ein erfindungsgemäßes Erdbohrgerät mit Gewindeelement und Sicherungsbolzen in einer geschnittenen Seitenansicht,
- Fig. 2 das: Gewindeelement der Fig. 1 in einer isometrischen Ansicht,
- Fig. 3: das Sicherungselement (Sicherungsbolzen) der Fig. 1 in einer isometrischen Ansicht,
- Fig. 4: ein Gewindeelement einer alternativen Ausführungsform in einer geschnittenen Seitenansicht,
- Fig. 5: ein Gewindeelement in einer dritten Ausführungsform in einer geschnittenen Seitenansicht und
- Fig. 6: das Gewindeelement nach Fig. 5 in einer perspektivischen Ansicht.

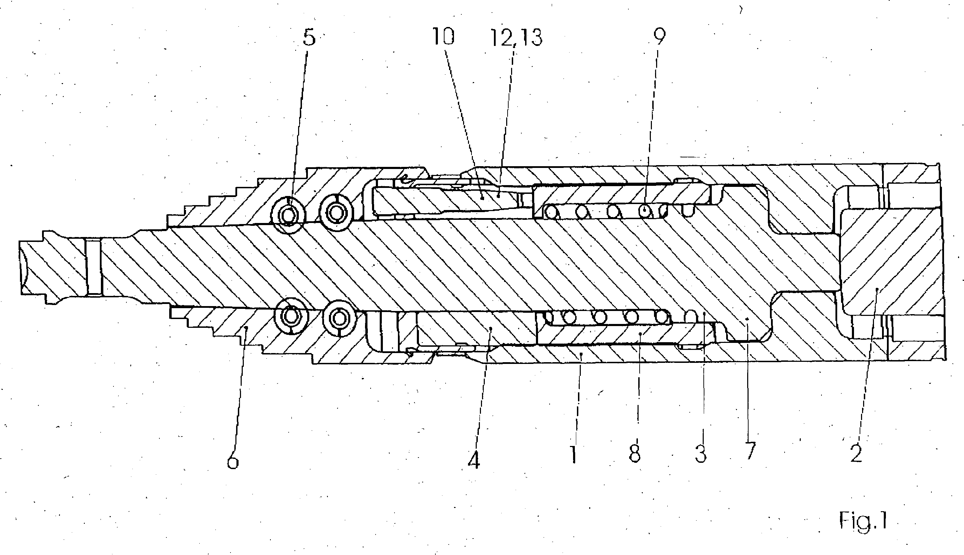

In der Fig. 1 ist in einer geschnittenen Seitenansicht der vordere Teil eines erfindungsgemäßen Erdbohrgeräts dargestellt. Dieses weist ein Gehäuse 1 auf, in dem ein Schlagkolben 2 unter dem Einfluss von Druckluft oszillierend angetrieben wird und dabei periodisch auf eine Schlagfläche eines Schlagbolzens 3 auftrifft, der beweglich über einen Gewindering 4 mit dem Gehäuse 1 verbunden ist. Die Gewindeverbindung zwischen dem Gewindering 4 und dem Gehäuse 1 wird mittels eines Sicherungsbolzens 10 gesichert.

Der Schlagbolzen 3 erstreckt sich durch den Gewindering 4 aus dem Gehäuse 1 heraus und ist dort über Bolzen 5 mit einem Stufenbohrkopf 6 verbunden.

Das Auftreffen des Schlagkolbens 2 auf die Schlagfläche des Schlagbolzens 3 bewirkt eine Relativbewegung des schlagbolzens 3 sowie des damit verbundenen Bohrkopfs 6 zu dem Gehäuse 1, so dass der Bohrkopf 6 das das Bohrgerät umgebende Erdreich verdrängt und ein Bohrloch erstellt wird, zunächst ohne dass das Gehäuse 1 mitbewegt wird. Erst nach einer definierten Relativbewegung des Schlagbolzens 3 zu dem Gehäuse 1 trifft ein Absatz 7 des Schlagbolzens 3 auf eine Hülse 8, die die Schlagenergie wiederum auf den mit dem Gehäuse 1 verschraubten Gewindering 4 überträgt. Auf diese Weise wird das Gehäuse 1 der Bohrvorrichtung dem bereits vorgetriebenen Bohrkopf 6 nachgeführt

Eine innerhalb der Hülse 8 angeordnete Feder 9 sorgt dafür, daß der Bohrkopf 6 nach jedem Hub in die eingefahrene Stellung zurückgeführt wird.

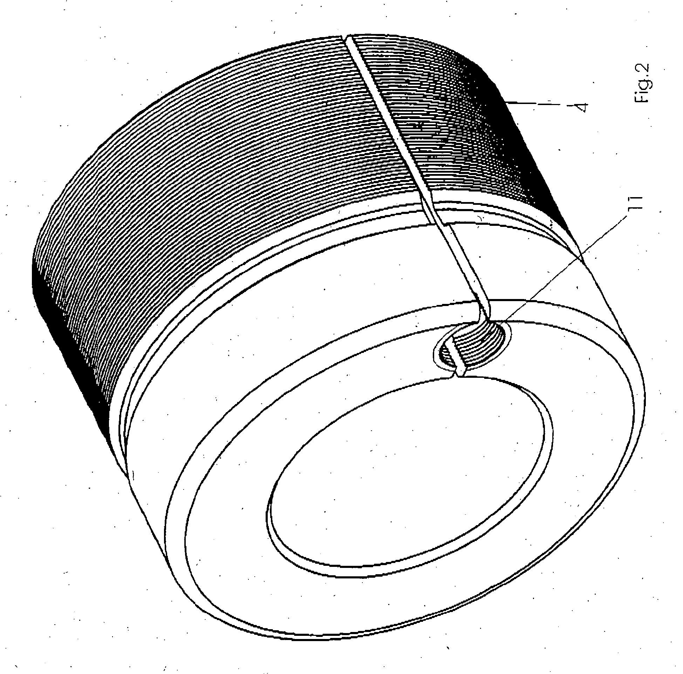

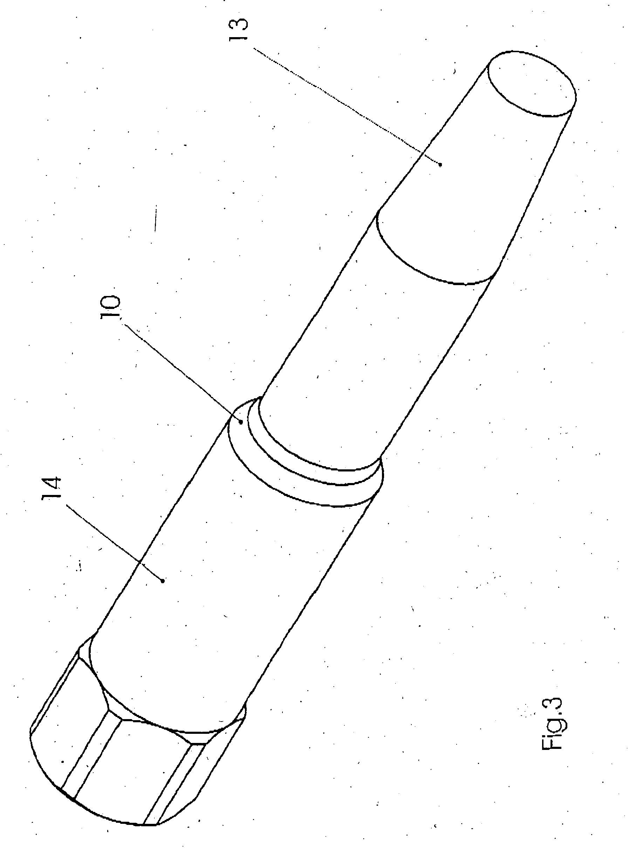

Wie in der Fig. 2 zu erkennen ist, weißt der Gewindering 4 einen Längsschlitz auf, in den eine Aufnahme für den Sicherungsbolzen 10 integriert ist. Ein Abschnitt der Aufnahme ist mit einem Gewinde 11 versehen, das zum Einschrauben des Sicherungsbolzens 10 dient, der hierfür einen entsprechenden Abschnitt mit einem Außengewinde 14 aufweist (vgl. Fig. 3).

Weiterhin weisen sowohl die Aufnahme in dem Gewindering 4 als auch der Sicherungsbolzen 10 korrespondierende konische Abschnitte 12, 13 auf. Beim Einschrauben des Sicherungsbolzens 10 in die Aufnahme wird der Längsschlitz des Gewinderings 4 durch die Relativbewegung der zwei konischen Abschnitte zueinander gespreizt, wodurch gleichzeitig die Flächenpressung der Gewindeverbindung zwischen dem Gewindering 4 und dem Gehäuse 1 erhöht wird.

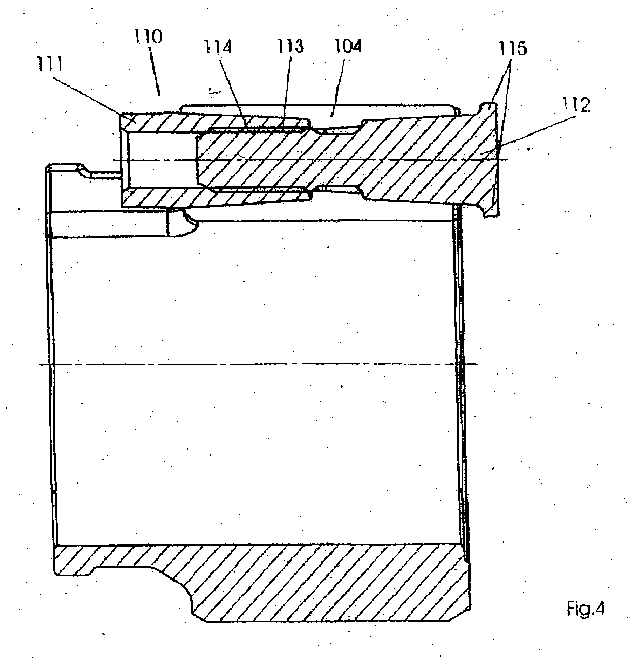

Die in Fig. 4 dargestellte alternative Ausführungsform zeigt ein mehrteilig ausgebildetes Sicherungselement 110. Das Sicherungselement 110 weist eine Hülse 111 auf, die in die Aufnahme des Gewindeelements 104 eingesetzt wird, und einen Bolzen 112 auf. Der Bolzen 112 ist teilweise in die Hülse 111. eingesetzt. Die Aufnahme durchgreift das Gewindeelement 104 und weist eine Öffnung auf einer Seite des Gewindeelements 104 und eine Öffnung auf einer gegenüberliegenden Seite des Gewindeelements 104 auf. Die Hülse 111 wird von einer Seite in die Aufnahme eingesetzt und der Bolzen 112 von der anderen Seite in die Aufnahme eingesetzt, wobei der Bolzen 112 mit einem Außengewinde 113 in ein Innengewinde 114 der Hülse 111 eingreift. Der Bolzen 112 weist eine Nase 115 als Verdrehsicherung auf. Die Nase 115 kann in eine korrespondiere Ausnehmung des Gewindeelements 104 eingreift.

Sowohl der Bolzen 112 als auch die Hülse 111 sind konisch ausgebildet und zwar derart, dass sich der jeweilige Konus in die entgegengesetzte Richtung verjüngt.

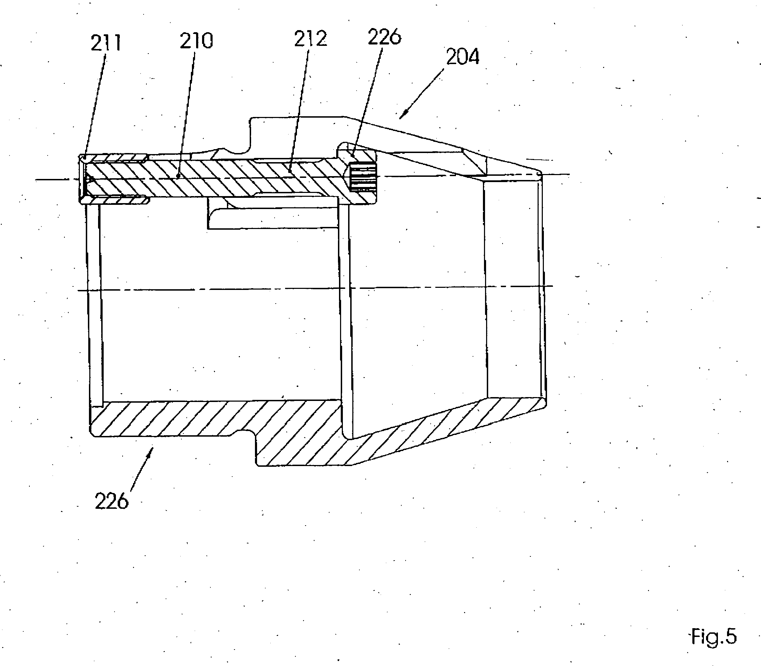

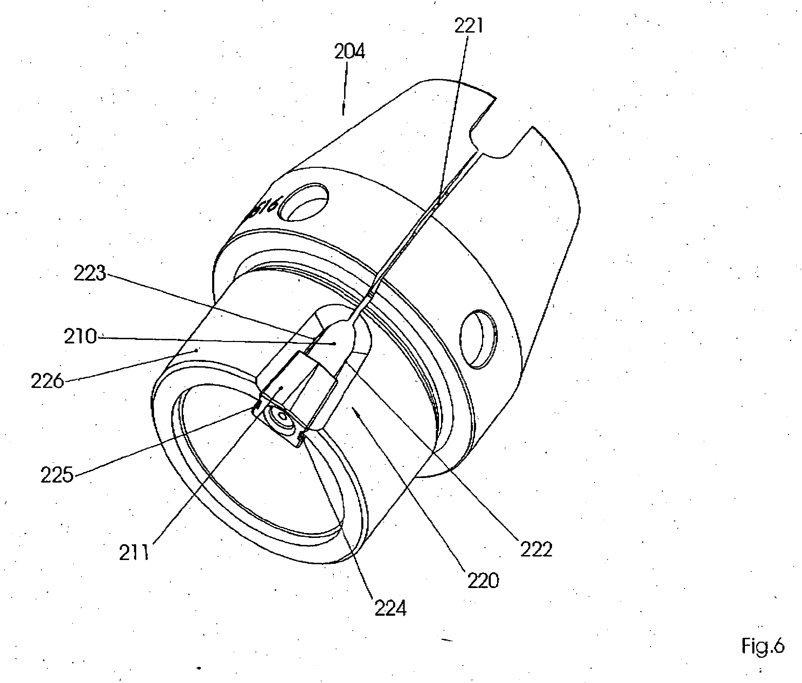

Die in Fig. 5, 6 dargestellte dritte Ausführungsform zeigt ein mehrteilig ausgebildetes Sicherungselement 210. Das Sicherungselement 210 weist eine klotzartig ausgebildete Hülse 211, die in einen Führungsabschnitt 220 der Aufnahme des Gewindeelements 204 eingesetzt wird, und einen Bolzen 212 auf. Der Bolzen 212 greift mit einem Außengewinde in ein Innengewinde der Hülse 211 ein. Das Gewindeelement 204 wird durch einen Spalt 221 sowohl in Längsrichtung als auch in Radialrichtung des Gewindeelements 204 durchgriffen. Der Spalt 221 durchgreift auch die Aufnahme.

Das Gewindeelement 204 weist ein Außengewinde 226 auf, mit dem es in ein nicht dargestelltes Gehäuse eingeschraubt werden kann.

Der Führungsabschnitt 220 der Aufnahme weist zwei Führungsflächen 222 und 223 auf, an denen die Hülse 211 zur Bewegung entlang dieser Führungsflächen 222, 223 geführt wird. Die Führungsflächen 222, 223 nähern sich in eine Bewegungsrichtung der Hülse 211 an. Dies ist die Bewegungsrichtung, in die die Hülse 211 bewegt werden muss, um das Gewindeelement 204 zu spreizen.

Mit Ausnahme des Kontakts mit den Führungsflächen 222, 223 und dem Eingriff mit dem Bolzen 212 ist die Hülse 211 frei von einem Kontakt mit anderen Elementen. Die Abschnitte der Aufnahme, die die Führungsflächen 222, 223 bilden, greifen in Nuten 224,225 der Hülse 211 ein.

Das Gewindeelement 204 weist einen hinteren Abschnitt auf, in dessen Innern eine Auflage vorgesehen ist, auf der ein Kopf 226 des Bolzens 212 aufliegt. Diese Auflage ist vorzugsweise konisch ausgebildet (nicht dargestellt), um mit einem konisch ausgebildeten Kopf (nicht dargestellt) zusammenzuwirken und eine Spreizwirkung auf das Gewindeelement 204 auszuüben. Angrenzend an die Auflage weist das Gewindeelement einen hülsenartigen Abschnitt auf, den der an den Kopf 226 angrenzende Teil des Bolzens 212 durchgreift.

## Patentansprüche

1. Erdbohrgerät mit einem Gehäuse (1) und einem innerhalb des Gehäuses (1) mittels eines zugeführten Druckfluids oszillierend bewegten Schlagkolben (2), **dadurch gekennzeichnet, dass** das Erdbohrgerät in zumindest einem Abschnitt ein Innengewinde aufweist, und ein Gewindeelement (104; 204) mit einem korrespondierenden Außengewinde zur direkten oder indirekten Übertragung der Schlagenergie von dem Schlagkolben (2) auf das Gehäuse (1) vorgesehen ist, wobei das Gewindeelement (104; 204) geschlitzt ist und eine Aufnahme für ein Sicherungselement (110, 210) aufweist, durch das beim Einsetzen in die Aufnahme der Schlitz gespreizt wird, wodurch der Außendurchmesser des Gewindeelements (104; 204) bzw. die Flächenpressung der Gewindeverbindung zwischen Gewindelement (104; 204) und Gehäuse (1) erhöht wird.

2. Erdbohrgerät gemäß Anspruch 1, **dadurch gekennzeichnet, dass** die Aufnahme des Gewindeelements zumindest einen sich verjüngenden Abschnitt (12) aufweist.

3. Erdbohrgerät gemäß einem der vorhergehenden Ansprüche, **dadurch gekennzeichnet, dass** das Sicherungselement einen Sicherungsbolzen (10) mit einem sich verjüngenden Abschnitt (13) aufweist.

4. Erdbohrgerät gemäß einem der vorhergehenden Ansprüche, **dadurch gekennzeichnet, dass** die Aufnahme zumindest einen Abschnitt mit einem Innengewinde (11) aufweist, der zu einem Gewindeabschnitt (14) eines Sicherungsbolzens (10) des Sicherungselements korrespondiert.

5. Erdbohrgerät gemäß einem der vorhergehenden Ansprüche, **dadurch gekennzeichnet, dass** das Gewindeelement als Gewindering (4) ausgebildet ist und ein Schlagbolzen (3) innerhalb des Gewinderings (4) in zumindest längsaxialer Richtung beweglich geführt ist.

6. Erdbohrvorrichtung gemäß Anspruch 5, **dadurch gekennzeichnet, dass** ein Bohrkopf (6) des Erdbohrgeräts mit dem Schlagbolzen (3) verbunden ist.

7. Erdbohrvorrichtung gemäß Anspruch 1 und 5, **dadurch gekennzeichnet, dass** der Schlagkolben (2) in einem Betriebszustand des Erdbohrgeräts auf den Schlagbolzen (3) auftrifft.

8. Erdbohrvorrichtung gemäß einem der Ansprüche 5 bis 7, **dadurch gekennzeichnet, dass** der Schlagbolzen (3) nach einer Relativbewegung über eine definierte Distanz zu dem Gehäuse (2) direkt oder indirekt auf den Gewindering (4) auftrifft.

9. Erdbohrgerät nach einem der Ansprüche 1 bis 8, **dadurch gekennzeichnet, dass** der Schlitz des Gewindeelements (204) das Gewindeelement (204) in Richtung seiner Längsachse und in. Radialrichtung durchgreift und auch die Aufnahme durchgreift.

## Claims

1. Earth boring device having a housing (1) and a percussion piston (2) moved in a oscillating manner within the housing (1) by means of a supplied pressure fluid, **characterised in that** the earth boring device has an internal thread in at least one section, and a threaded element (104; 204) is provided with a corresponding external thread for directly or indirectly transmitting the impact energy of the percussion piston (2) onto the housing (1), the threaded element (104; 204) being slotted and having a recess for a securing element (110, 210), via which the slot is spread apart when inserted into the recess, as a result of which the outside diameter of the threaded element (104; 204) or the surface pressure of the threaded connection between threaded element (104; 204) and housing (1) is increased.

2. Earth boring device according to claim 1, **characterised in that** the recess of the threaded element has at least one tapered section (12).

3. Earth boring device according to any one of the preceding claims, **characterised in that** the securing element has a locking bolt (10) with a tapered section (13).

4. Earth boring device according to any one of the preceding claims, **characterised in that** the recess has at least one section with an internal thread (11), which corresponds to a threaded section (14) of a locking bolt (10) of the securing element.

5. Earth boring device according to any one of the preceding claims, **characterised in that** the threaded element is formed as threaded ring (4) and a percussion bolt (3) is movably guided within the threaded ring (4) In at least the longitudinal axial direction.

6. Earth drilling fixture according to claim 5, **characterised in that** a drill head (6) of the earth boring device is connected to the percussion bolt (3).

7. Earth boring device according to claim 1 and 5, **characterised in that**, in an operating state of the earth boring device, the percussion piston (2) strikes the percussion bolt (3).

8. Earth drilling fixture according to any one of claims 5 to 7, **characterised in that**, after a relative movement over a defined distance to the housing (2), the percussion bolt (3) strikes the threaded ring (4) directly or indirectly.

9. Earth boring device according to any one of claims 1 to 8, **characterised in that** the slot of the threaded element (204) penetrates the threaded element (204) in the direction of its longitudinal axis and in the radial direction and also penetrates the recess.

## Revendications

1. Tarière, avec un carter (1) et avec un piston de percussion (2) déplacé de façon oscillante à l'intérieur du carter (1) au moyen d'un fluide sous pression alimenté, **caractérisée en ce que** la tarière présente un filetage intérieur dans au moins un tronçon, et il est prévu un élément fileté (104 ; 204) avec un filetage extérieur correspondant pour la transmission directe ou indirecte de l'énergie de percussion du piston de percussion (2) sur le carter (1), sachant que l'élément fileté (104 ; 204) est fendu et présente un logement pour un élément d'arrêt (110, 210) par lequel la fente est écartée lorsqu'il est inséré dans le logement, de sorte que le diamètre extérieur de l'élément fileté (104 ; 204) ou encore la pression superficielle de la liaison filetée entre l'élément fileté (104 ; 204) et le carter (1) est augmenté(e).

2. Tarière selon la revendication 1, **caractérisée en ce que** le logement de l'élément fileté présente un tronçon (12) allant en se rétrécissant.

3. Tarière selon l'une des revendications précédentes, **caractérisée en ce que** l'élément d'arrêt présente un boulon d'arrêt (10) ayant un tronçon (13) allant en se rétrécissant.

4. Tarière selon l'une des revendications précédentes, **caractérisée en ce que** le logement présente au moins un tronçon ayant un filetage intérieur (11), qui correspond avec un tronçon fileté (14) d'un boulon d'arrêt (10) de l'élément d'arrêt.

5. Tarière selon l'une des revendications précédentes, **caractérisée en ce que** l'élément fileté est réalisé sous forme de bague filetée (4), et un boulon de percussion (3) est guidé à déplacement au moins en direction axiale longitudinale à l'intérieur de la bague filetée (4).

6. Tarière selon la revendication 5, **caractérisée en ce qu'**une tête de forage (6) de la tarière est reliée au boulon de percussion (3).

7. Tarière selon les revendications 1 et 5, **caractérisée en ce que** le piston de percussion (2) de la tarière agit sur le boulon de percussion (3) dans un état de fonctionnement de la tarière.

8. Tarière selon l'une des revendications 5 à 7, **caractérisée en ce que** le boulon de percussion (3), à la suite d'un mouvement relatif sur une distance définie par rapport au carter (1), agit directement ou indirectement sur la bague filetée (4).

9. Tarière selon l'une des revendications 1 à 8, **caractérisée en ce que** la fente de l'élément filetée (204) traverse l'élément fileté (204) dans la direction de son axe longitudinal et en direction radiale, et traverse également le logement.
